(19) Europäisches Patentamt
European Patent Office
Office européen des brevets

(11) EP 1 281 696 A1

(12) EUROPEAN PATENT APPLICATION
published in accordance with Art. 158(3) EPC

(43) Date of publication:
**05.02.2003 Bulletin 2003/06**

(21) Application number: **01980900.3**

(22) Date of filing: **25.10.2001**

(51) Int Cl.[7]: **C04B 35/80**

(86) International application number:
**PCT/JP01/09361**

(87) International publication number:
**WO 02/068361 (06.09.2002 Gazette 2002/36)**

(84) Designated Contracting States:
**AT BE CH CY DE DK ES FI FR GB GR IE IT LI LU MC NL PT SE TR**

(30) Priority: **27.02.2001 JP 2001052148**

(71) Applicant: **JAPAN SCIENCE AND TECHNOLOGY CORPORATION**
**Kawaguchi-shi, Saitama 332-0012 (JP)**

(72) Inventors:
- **KOHYAMA, Akira, Institute of Advanced Energy Uji-shi, Kyoto 611-0011 (JP)**
- **KOTANI, Masaki, Institute of Advanced Energy Uji-shi, Kyoto 611-0011 (JP)**
- **KATOH, Yutai, Institute of Advanced Energy Uji-shi, Kyoto 611-0011 (JP)**

(74) Representative: **Müller-Boré & Partner**
**Patentanwälte**
**Grafinger Strasse 2**
**81671 München (DE)**

# (54) METHOD FOR PRODUCING SIC FIBER-REINFORCED SIC COMPOSITE MATERIAL HAVING HIGH DENSITY

(57) Polymeric slurry is prepared by dispersing fine SiC particles in polyvinyl-silane (PVS) having the under-mentioned structural units (a) and (b) at an a/b ratio of 1. A SiC fiber preformed is impregnated with the undiluted polymeric slurry and pyrolyzed at a temperature of 1000°C or higher. SiC particles of 0.1-1.0 µm in size are preferably suspended in PVS at a ratio of 25-70 mass %. PVS, which is ceramized for formation of SiC matrix at a high yield ratio by pyrolysis, well infiltrates into openings between SiC filaments. Consequently, dense SiC fiber-reinforced SiC-matrix composite is manufactured. The SiC composite is further densified by repetition of impregnation with sole PVS and pressure-less pyrolysis.

(a)

$$—SiH_2—CH_2—CH_2—$$

(b)

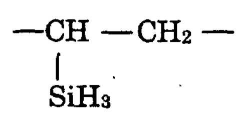

EP 1 281 696 A1

## Description

TECHNICAL FIELD OF THE INVENTION

The present invention relates to a method of manufacturing SiC composite, which is useful as structural members of aircraft, spacecraft, nuclear reactors, nuclear fusion power reactors or the like exposed to a high-temperature atmosphere or neutron radiation, excellent in heat- and irradiation-resistance.

BACKGROUND OF THE INVENTION

Various ceramics such as SiC and $Si_3N_4$, which are good of heat-resistance, corrosion-resistance and mechanical strength, have been developed so far for structural members of aircraft, spacecraft, nuclear reactors or the like exposed to a severe environment. Such ceramics are also used as members of heat exchangers or mechanical seals driven under heavy-duty conditions. Especially, SiC is a suitable material in various industrial fields from aerospace to nuclear power generation, due to its excellent heat-and wear-resistance as well as chemical stability and inherent reduced activation properties.

SiC is brittle itself, despite of good high-temperature property with a sublimation temperature higher than 2600°C. In order to overcome poor toughness, SiC composite reinforced with SiC fibers has been proposed, as disclosed in A.Lacombe and C.Bonnet, 2nd Int. Aerospace Planes Conf. Proc. AIAA-90-5208(1990) and C. W. Hollenberg et al., J. Nucl. Mat., 219, (1995)70-86.

A representative method for production of fiber-reinforced SiC composite is a polymer impregnation and pyrolysis process, wherein a SiC fiber preform is impregnated with a polymeric SiC precursor, and then pyrolyzed to form a matrix. The polymer impregnation and pyrolysis process, which resembles a conventional FRP (fiber-reinforced plastics) manufacturing process in impregnation of a fiber preform with liquid material, is expected as a process suitable for production of complicated parts with high freedom on shape and size.

The polymer impregnation and pyrolysis process necessitates infiltration of a polymeric SiC precursor, which will form SiC matrix, to fine openings between filaments of a SiC fiber preform. In a conventional method using a polymeric SiC precursor solidus or viscous at an ambient temperature, the polymeric SiC precursor is conditioned to proper viscosity by melting with a heat or dilution with a solvent in prior to pyrolysis, in order to improve its infiltration into the SiC fiber preform. Moreover, the SiC precursor shall be a polymer, which can be ceramized at a high yield ratio, in order to form a matrix of dense SiC composite.

In general, a polymer, which is fluid enough to infiltrate into openings between SiC filaments, has one-dimensional molecular structure of low molecular weight or with a small ratio of network structure. The polymer having such a structure is somewhat discharged as gases without conversion into ceramics by application of a thermal energy to break intermolecular restraints. Gases partially remain as bubbles in the SiC fiber preform. Bubbles in the SiC fiber preform impede densification of SiC fiber-reinforced SiC-matrix composite during pyrolysis. Formation of network structure is accelerated during pyrolysis by introduction of an unsaturated hydrocarbon or hydroxyl group to side chains of the polymeric SiC precursor. However, introduction of an unsaturated hydrocarbon or hydroxyl group causes increase of surplus carbon and oxygen derived from pyrolysis and worsens properties of SiC-fiber-reinforced SiC-matrix composite.

SUMMARY OF THE INVENTION

The present invention aims at provision of dense SiC fiber-reinforced SiC-matrix composite, which is good of fracture work without use of any solvent harmful to the environment. An object of the present invention is to manufacture SiC fiber-reinforced SiC-matrix composite by impregnating a SiC fiber preform with polyvinyl-silane (PVS), which is good of infiltration and well ceramized in prior to pyrolysis.

The present invention proposes a new method of manufacturing SiC-matrix composite reinforced with SiC fiber. In the proposed method, polymeric slurry is prepared by dispersing fine SiC particles in PVS having the undermentioned structural units (a) and (b) with an a/b ratio of 1. A SiC fiber preform is impregnated with the undiluted polymeric slurry. The impregnated SiC fiber preform is then pyrolyzed at 1000-1300°C.

(a)

$$-S_iH_2-CH_2-CH_2-$$

(b)

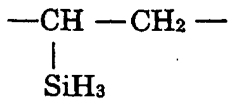

Fine SiC particles of 0.1-1.0 µm in size may be dispersed in PVS at a ratio of 25-70 mass %. SiC fiber-reinforced SiC-matrix composite can be further densified by repetition of impregnation with sole PVS and pyrolysis, after the impregnated SiC fiber preform is pyrolyzed.

BRIEF DESCRIPTION OF THE DRAWINGS

Fig. 1 is a chart showing an effect of mass fraction of SiC particles on density of a pyrolyzed body.
Fig. 2 is a chart showing an effect of mass fraction of SiC particles on flexural strength and fracture work of a pyrolyzed body.

PREFERRED EMBODIMENTS OF THE INVENTION

The inventive method selectively uses PVS having the above-mentioned structural units (a), (b) with an a/b ratio of 1, among silicon compounds having vinyl groups or synthesized by polymerization of vinyl compounds. The defined PVS mainly comprises one-dimensional molecular structure having side chains to which many Si-H bonds are added, with a liquid phase of low-viscosity (approximately 70cP) at an ambient temperature. PVS is kept at good fluidity enough to infiltrate into openings between SiC filaments, even after dispersion of fine SiC particles at a high ratio. PVS also has the feature that it is ceramized to the same composition at a yield ratio of 30-40 mass %.
Use of the defined PVS enables impregnation of a SiC fiber preform with a polymeric SiC precursor without necessity of diluting it in a solvent, so as to form SiC matrix at a high yield ratio. Omission of a solvent is advantageous in densification of a product. If PVS diluted in a solvent is used for impregnation of the SiC fiber preform, a ratio of PVS consumed for impregnation is reduced, and a product is not densified so much. Use of undiluted PVS is also appropriate for manufacturing fiber-reinforced SiC composite at a low cost, since there is no necessity for processing of waste liquids, which are harmful to the environment.
SiC particles do not reduce their volume during pyrolysis of PVS, and volumetric shrinkage of an impregnated SiC fiber preform is suppressed by infiltration of PVS suspending SiC particles therein. As a result, the impregnated SiC fiber preform is pyrolyzed to fiber-reinforced SiC composite of stable quality improved in physical property with smaller porosity.
SiC particles are preferably of 0.1-1.0 µm (more preferably 0.2-0.5 µm) in size. SiC particles are uniformly distributed to openings between SiC filaments, as size of SiC particles is smaller with respect to diameter of SiC filament. However, specific surface area of SiC particles becomes larger as decrease of particle size, so that dispersion of too fine SiC particles unfavorably increases viscosity of PVS slurry and impedes impregnation of a SiC fiber preform. In this sense, size of SiC particles to be dispersed in PVS is preferably controlled within a range of 0.1-1.0 µm.
Fine SiC particles are dispersed in PVS, in order to suppress volumetric shrinkage of an impregnated SiC fiber preform during pyrolysis of PVS. As insufficient dispersion of SiC particles in PVS, the impregnated SiC fiber preform shrinks its volume to a greater extent without increase of density. A ratio of SiC particles dispersed in PVS is preferably controlled to 25 mass % or more, in order to form a continuous SiC matrix free from cracks in the vicinity of SiC filaments. However, excessive dispersion of SiC particles more than 70 mass % makes PVS too viscous to infiltrate into openings between SiC filaments, resulting in poor densification of a product. These effects of SiC particles are confirmed by various experimental data as shown in Figs. 1 and 2. An optimal dispersion ratio of SiC particles is within a range of 50-70 mass %.
The impregnated SiC fiber preform is preferably pyrolyzed at 1000-1300°C in an argon atmosphere. If a pyrolysis temperature is below 1000°C, PVS is not completely ceramized due to insufficient pyrolysis. Incomplete conversion into ceramics means poor heat-resistance of fiber-reinforced SiC composite. If the impregnated SiC fiber preform is heated at a temperature higher than 1300°C on the contrary, pyrolyzed products are excessively crystallized and grown up to coarse grains. Excessive growth of crystal grains causes occurrence of cracks and decrease in strength.
Argon is used as an atmospheric gas for pyrolysis of the impregnated SiC fiber preform, in order to inhibit

production of $SiO_2$ which unfavorably reduces strength of fiber-reinforced SiC composite. If the impregnated preform is pyrolyzed in an oxygen-containing atmosphere, Si-H bonds in PVS would be oxidized to $SiO_2$. If the impregnated preform is pyrolyzed in a nitrogen-containing atmosphere, nitrogen would be incorporated in PVS, resulting in generation of $Si_3N_4$. A vacuum atmosphere would put a large burden on a vacuum pump due for discharging gasses during pyrolysis.

Gases, which are generated by pyrolysis of PVS, sometimes remain as bubbles in a pyrolyzed body. Decrease of density caused by residual bubbles is diminished by pressing an impregnated SiC fiber preform during pyrolysis. In a pyrolysis process accompanied with application of a pressure, the impregnated SiC fiber preform is preferably preheat-treated at 300-400°C so as to moderate PVS to a properly cured state. A pressure, which is applied to the impregnated SiC fiber preform during pyrolysis, is preferably determined within a range of 2-10 MPa. An effect of a pressure on density of a pyrolyzed body is noted at 2 MPa or more. However, application of a pressure more than 10 MPa needs an expensive press and also causes damages on the SiC fiber preform.

Optimal conditions for pyrolyzing the impregnated SiC fiber preform are a heating temperature of 1200°C and a pressure of 5 MPa.

SiC fiber-reinforced SiC-matrix composite is further densified and improved in physical property by repetition of impregnation with sole PVS and pressure-less pyrolysis.

The other features of the present invention will be apparent from the following Example.

Polymeric slurry was prepared by dispersing β-SiC particles of 0.27 μm in average size in PVS at a ratio of 57 mass % and stirring the suspension in an open atmosphere. Plain-woven cloth of SiC fiber cut out to 40mm in length and 40mm in width was dipped in the polymeric slurry in an open atmosphere, so as to fill openings between SiC filaments with the polymeric slurry.

10 of SiC fiber sheets impregnated with the polymeric slurry were laminated to a polymer-impregnated SiC fiber preform of 3 mm in thickness. The polymer-impregnated SiC fiber preform was sealed in a carbon receptacle, heated up to 330°C at a heating rate of 300°C/h in an argon atmosphere, held at 330°C for 10 minutes, and then gradually cooled down to an ambient temperature over 1 hour or longer. It was noted by observation of the preheat-treated SiC fiber preform that the semi-cured polymeric slurry infiltrated into openings between SiC filaments.

The preheat-treated SiC fiber preform was inserted in a carbon mold for pressurized pyrolysis, and located in an oven equipped with a carbon heater. Thereafter, the SiC fiber preform was heated up to 1200°C at a heating rate of 300°C/h in an argon atmosphere under application of a unidirectional pressure of 5 MPa along its perpendicular direction, held at 1200°C for 10 minutes and cooled down in a pressure-free state over 2 hours. A product was SiC fiber-reinforced SiC-matrix composite with bulk density of 2.0 $g/cm^3$.

The SiC composite was further impregnated with sole PVS in vacuum and pyrolyzed without pressure at 1200°C. The impregnation with sole PVS and the pressure-less pyrolysis were alternately repeated 8 times. The SiC composite was densified to bulk density of 2.4 $g/cm^3$ by repetition of the impregnation and the pressure-less pyrolysis. The SiC composite had flexural strength of 281 MPa in average and fracture work of 1.489 $kJ/m^2$, and its fracture mode was nonlinear.

INDUSTRIAL APPLICABILITY OF THE INVENTION

According to the present invention as above-mentioned, SiC fiber-reinforced SiC-matrix composite is manufactured from a SiC fiber preform impregnated with thermosetting PVS, which is fluid at an ambient temperature and well ceramized, as a polymeric SiC precursor for formation of SiC matrix. PVS infiltrates into openings between SiC filament without necessity of dilution in a solvent. Consequently, dense SiC fiber-reinforced SiC-matrix composite is manufactured with high productivity, and drawbacks derived from use of a solvent are eliminated. The SiC composite is further densified by impregnation with PVS slurry suspending SiC particles therein or by repetition of impregnation with sole PVS and pressure-less pyrolysis. The SiC composite produced in this way is useful as structural members of aircraft, spacecraft, nuclear reactors, nuclear fusion power reactors or the like driven under severe conditions or exposed to a high-temperature atmosphere or neutron radiation, due to its excellent mechanical strength, high-temperature property and irradiation-resistance.

## Claims

**1.** A method of manufacturing dense SiC fiber-reinforced SiC-matrix composite, which comprises the steps of:

providing a polyvinyl-silane having the below-mentioned structural units (a) and (b) at an a/b ratio of 1;
preparing a polymeric slurry by dispersing fine SiC particles in said polyvinyl-silane;
impregnating a SiC fiber preform with said polymeric slurry without dilution; and

pyrolyzing said impregnated SiC fiber preform at 1000-1300°C.

(a)

$$—S_iH_2—CH_2—CH_2—$$

(a)

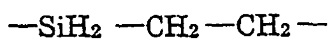

(b)

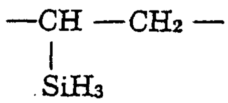

**2.** The method of manufacturing dense SiC fiber-reinforced SiC-matrix composite defined by Claim 1, wherein the polymeric slurry is polyvinyl-silane mixed with SiC particles of 0.1-1.0 μm in size at a ratio of 25-70 mass %.

**3.** The method of manufacturing dense SiC fiber-reinforced SiC-matrix composite defined by Claim 1 or 2, wherein the SiC fiber preform impregnated with polyvinyl-silane suspending fine SiC particles therein is further subjected to repetition of impregnation with sole polyvinyl-silane and pressure-less pyrolysis.

FIG.1

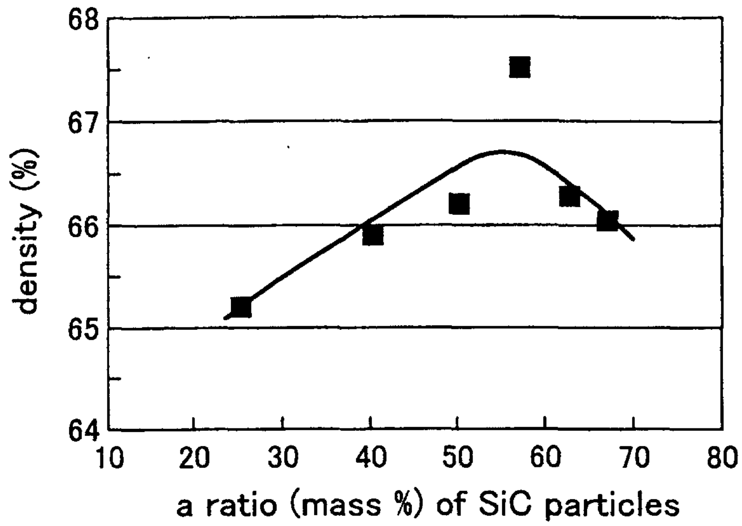
68
67
66
65
64
density (%)
10
20
30
40
50
60
70
80
a ratio (mass %) of SiC particles

FIG.2

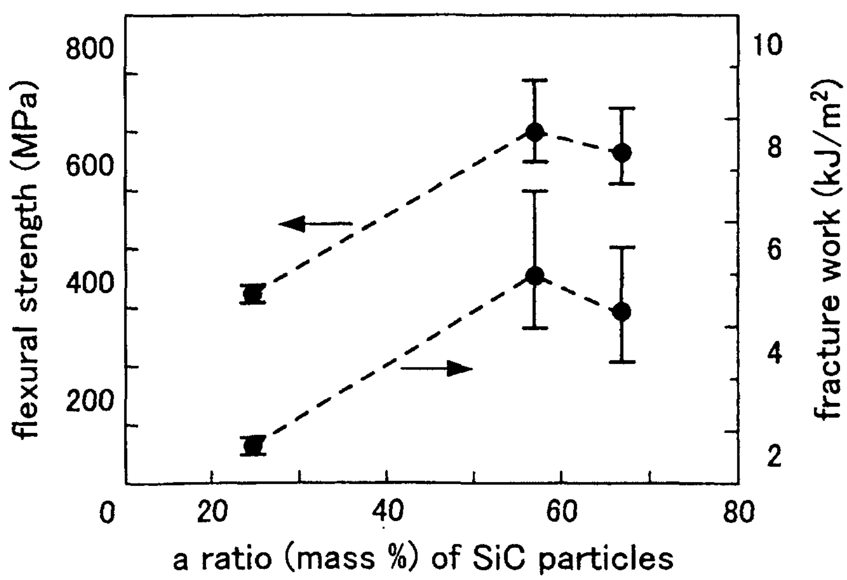
800
600
400
200
0
flexural strength (MPa)
10
8
6
4
2
fracture work (kJ/m²)
20
40
60
80
a ratio (mass %) of SiC particles

## INTERNATIONAL SEARCH REPORT

International application No.
PCT/JP01/09361

A. CLASSIFICATION OF SUBJECT MATTER
Int.Cl[7] C04B35/80

According to International Patent Classification (IPC) or to both national classification and IPC

B. FIELDS SEARCHED

Minimum documentation searched (classification system followed by classification symbols)
Int.Cl[7] C04B35/565~577, 35/80

Documentation searched other than minimum documentation to the extent that such documents are included in the fields searched
Jitsuyo Shinan Koho 1926-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP 1024121 A2 (Ishikawajima-Harima Heavy Industries Co., Ltd.), 02 August, 2000 (02.08.00), Par. No. [0033] & JP 2000-219576 A Par. No. [0016] | 1-3 |
| A | JP 11-116337 A (Japan Nuclear Cycle Development Institute), 27 April, 1999 (27.04.99), Par. No. [0049] & FR 2769621 A1 | 1-3 |
| A | JP 2001-10863 A (Ishikawajima-Harima Heavy Industries Co., Ltd.), 16 January, 2001 (16.01.01), Par. No. [0026] (Family: none) | 1-3 |
| A | JP 11-130552 A (Japan Atomic Energy Research Institute), 18 May, 1999 (18.05.99), Claim 2 (Family: none) | 1-3 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 November, 2001 (12.11.01) | 20 November, 2001 (20.11.01) |
| Name and mailing address of the ISA/ Japanese Patent Office | Authorized officer |
| Facsimile No. | Telephone No. |

Form PCT/ISA/210 (second sheet) (July 1992)